# EUROPEAN PATENT SPECIFICATION

(11) **EP 2 764 570 B1**
(45) Date of publication and mention of the grant of the patent: **13.12.2017**
(21) Application number: 12838849.3
(22) Date of filing: 07.10.2012
(51) Int. Cl.: H01M 8/04, H01M 8/24, H01M 4/88, H01M 8/1213, H01M 4/90, H01M 8/1253, H01M 8/0215, H01M 8/124

(54) **METHOD OF FORMING A SOLID OXIDE FUEL CELL**
VERFAHREN ZUR HERSTELLUNG EINER FESTOXIDBRENNSTOFFZELLE
PROCÉDÉ DE FORMATION DE PILE À COMBUSTIBLE À OXYDE SOLIDE

(30) Priority: 07.10.2011 US 201161544367 P
(43) Date of publication of application: 13.08.2014
(73) Proprietor: Saint-Gobain Ceramics & Plastics Inc., Worcester, Massachusetts 01615-0138 (US)
(72) Inventor: MOHANRAM, Aravind, Northborough, Massachusetts 01532 (US); NARENDAR, Yeshwanth, Westford, Massachusetts 01886 (US); HUANG, Hansong, Ashland, Massachusetts 01721 (US); LIN, Guangyong, Shrewsbury, Massachusetts 01545 (US)
(74) Representative: Zimmermann & Partner Patentanwälte mbB
(86) International application number: PCT/US2012/059157
(87) International publication number: WO 2013/052938

(56) References cited:
- US-A- 5 935 727
- US-A1- 2003 015 431
- US-A1- 2004 231 143
- US-A1- 2006 197 264
- US-A1- 2007 237 999
- US-A1- 2008 248 361

## Description

### FIELD OF THE DISCLOSURE

The following is directed to solid oxide fuel cells (SOFCs) and methods of forming SOFCs, and particularly directed to a single, free-sintering process of forming a SOFC unit cell.

### Description of the Related Art

A fuel cell is a device that generates electricity by a chemical reaction. Among various fuel cells, solid oxide fuel cells (SOFCs) use a hard, ceramic compound metal (e.g., calcium or zirconium) oxide as an electrolyte. Typically, in solid oxide fuel cells, an oxygen gas, such as O₂, is reduced to oxygen ions (O²⁻) at the cathode, and a fuel gas, such as H2 gas, is oxidized with the oxygen ions to form water at the anode.

In some instances, fuel cells assemblies have been designed as stacks, which include a cathode, anode, and solid electrolyte between the cathode and the anode. Each stack can be considered a subassembly, which can be combined with other stacks to form a full SOFC article. In assembling the SOFC article, electrical interconnects can be disposed between the cathode of one stack and the anode of another stack.

However, stacks of individual fuel cells can be susceptible to damage caused by fluctuation in temperature during their formation or use. Specifically, materials employed to form the various components, including ceramics of differing compositions, exhibit distinct material, chemical, and electrical properties that can result in breakdown and failure of the SOFC article. In particular, fuel cells have a limited tolerance for changes in temperature. Problems associated with mechanical stress caused by changes in temperature are exacerbated when individual fuel cells are stacked. Limited thermal shock resistance of fuel cells, particularly of fuel cells assembled in stacks, limits the yield of production and poses a heightened risk of failure during operation. US 2007/237999 A1 relates to a method for forming a first green cell structure having a first green electrode layer, a green electrolyte layer overlaying the first green electrode layer, and a second green electrode layer overlaying the green electrolyte layer. A second green cell structure is formed having a first green electrode layer, a green electrolyte layer overlaying the first green electrode layer, and a second green electrode layer overlaying the green electrolyte layer. A green ceramic interconnect layer is formed disposed between the first green cell structure and the second green cell structure. The first green cell structure, the green ceramic interconnect layer, and the second green cell structure are hot pressed together to integrally bond the first green cell structure, the green ceramic interconnect layer and the second green cell structure to form an integrated, densified SOFC cell stack. The document US 2006/197264 A1 discloses another prior art method of forming a solid oxide fuel cell. Moreover, the fabrication of SOFC articles has its own set of concerns. Concerns associated with layering and sintering of the compositionally different layers is one of the most formidable challenges in SOFC manufacturing. Current approaches focus on multi-step firing processes or one step hot-pressing and the use of metallic interconnect materials. The industry continues to demand improved SOFC articles and methods of forming.

### SUMMARY

In an aspect, a method for forming a solid oxide fuel cell (SOFC) article as defined in claim 1 includes forming a green SOFC unit cell having a green electrolyte layer, a green interconnect layer, and a first green electrode layer disposed between the electrolyte layer and the interconnect layer. The method further including sintering the green SOFC unit cell in a single sintering process to form a sintered SOFC unit cell, wherein diffusion bonds are formed between the components of the interconnect layer and the first electrode layer.

### BRIEF DESCRIPTION OF THE DRAWINGS

The present disclosure may be better understood, and its numerous features and advantages made apparent to those skilled in the art by referencing the accompanying drawings.
FIG. 1 is an illustration of a SOFC unit cell in accordance with an embodiment.
FIG. 2 is an illustration of a SOFC unit cell in accordance with an embodiment.
FIG. 3 is an illustration of a SOFC unit cell in accordance with an embodiment.
FIG. 4 is an illustration of a SOFC unit cell in accordance with an embodiment.
FIG. 5 is an illustration of a SOFC unit cell in accordance with an embodiment.
FIG. 6 includes a cross-sectional SEM image of a portion of a unit cell formed according to an embodiment.
FIG. 7 includes a cross-sectional SEM image of a portion of a unit cell formed according to an embodiment.
FIG. 8 includes a cross-sectional SEM image of a portion of a unit cell formed according to an embodiment.
FIG. 9 includes a cross-sectional SEM image of a portion of a unit cell formed according to an embodiment.

The use of the same reference symbols in different drawings indicates similar or identical items.

### DETAILED DESCRIPTION

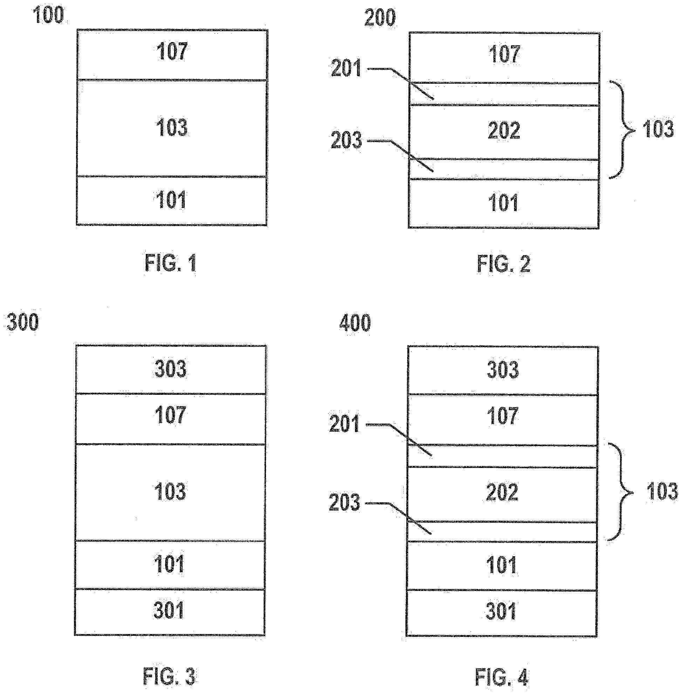

The following describes solid oxide fuel cell (SOFCs) articles including SOFC unit cells and methods of forming the SOFC unit cells. FIG. 1 includes an illustration of a SOFC unit cell in accordance with an embodiment. The SOFC unit cell 100 includes an electrolyte layer 101, an interconnect layer 107, and an electrode layer 103 disposed between the electrolyte layer 101 and the interconnect layer 107. In particular, the electrolyte layer 101 can be in direct contact with the electrode layer 103 and the interconnect layer 107 can be in direct contact with the electrode layer 103.

Before assembling the components layers in the unit cell 100 as illustrated in FIG. 1, each of the layers can be formed individually. That is, the layers can be formed separately as green layers and assembled together into the unit cell 100. Alternatively, the layers may be formed in green state in succession on each other, such that a first green electrolyte layer 101 is formed, and thereafter, a green electrode layer 103 can be formed overlying the green electrolyte layer 101, and thereafter, a green interconnect layer 107 can be formed overlying the green electrode layer 103.

Reference herein to "green" articles is reference to materials that have not undergone sintering to affect densification or grain growth. A green article is an unfinished article that may be dried and have low water content, but is unfired. A green article can have suitable strength to support itself and other green layers formed thereon.

The layers described according to the embodiments herein can be formed through techniques including, but not limited to, casting, deposition, printing, extruding, lamination, die-pressing, gel casting, spray coating, screen printing, roll compaction, injection molding, and a combination thereof. In one particular instance, each of the layers can be formed via screen printing. In another embodiment, each of the layers can be formed via a tape casting process.

The electrolyte layer 101 can include an inorganic material, such as a ceramic material. For example, the electrolyte layer 101 can include an oxide material. Some suitable oxides can include zirconia (ZrO2), and more particularly, zirconia-based materials that can incorporate other elements such as stabilizers or dopants, which can include elements such as yttria (Y), ytterbium (Yb), cerium (Ce), scandium (Sc), samarium (Sm), gadolinium (Gd), lanthanum (La), praseodymium (Pr), neodymium (Nd), and a combination thereof. Particular examples of suitable electrolyte materials can include Sc₂O₃-doped ZrO₂, Y₂O₃-doped ZrO₂, Yb₂O₃-doped ZrO₂, Sc₂O₃-doped and CeO₂-doped ZrO₂, and a combination thereof. The electrolyte layer can also include ceria (CeO₂), and more particularly ceria-based materials, such as Sm₂O₃-doped CeO2, Gd₂O₃-doped CeO2, Y₂O₃-doped CeO2, and CaO-doped CeO₂. The electrolyte material can also include lanthanide-based materials, such as LaGaO₃. The lanthanide-based materials can be doped with particular elements, including but not limited to, Ca, Sr, Ba, Mg, Co, Ni, Fe, and a combination thereof. In particular, the electrolyte material can include a lanthanum strontium manganite (LSM) material. Some exemplary electrolyte materials include La_{0.8}Sr_{0.2}Ga_{0.8}Mn_{0.2}O₃, La_{0.8}Sr_{0.2}Ga_{0.8}Mn_{0.15}Co_{0.5}O₃, La_{0.9}Sr_{0.1}Ga_{0.8}Mn_{0.2}O₃, LaSrGaO₄, LaSrGa₃O₇, or La_{0.9}A_{0.1}GaO₃, wherein A represents one of the elements from the group Sr, Ca, or Ba. According to one particular embodiment, the electrolyte layer 101 can be made of ZrO₂ doped with 8 mol % Y₂O₃ (i.e., 8 mol % Y₂O₃-doped ZrO₂). The 8 mol % Y₂O₃ can have particular dopants, such as Al and/or Mn to facilitate thermal reaction characteristics and improve the processing characteristics of the electrolyte material. Other exemplary electrolyte materials can include doped yttrium-zirconate (e.g., Y₂Zr₂O₇), doped gadolinium-titanate (e.g., Gd₂Ti₂O₇) and brownmillerites (e.g., Ba₂In₂O₆ or Ba₂In₂O₅).

The electrolyte layer 101 can be a particularly thin, planar layer of material. For example, the electrolyte layer 101 can have an average thickness of not greater than about 1 mm, such as not greater than about 500 µm (microns), such as not greater than about 300 µm (microns), not greater than about 200 µm (microns), not greater than about 100 µm (microns), not greater than about 80 µm (microns), not greater than about 50 µm (microns), or even not greater than about 25 µm (microns). Still, the electrolyte layer 101 can have an average thickness of at least about 1 µm (micron), such as at least about 2 µm (microns), at least about 5 µm (microns), at least about 8 µm (microns), or at least about 10 µm (microns). It will be appreciated that the average thickness of the electrolyte layer 101 can have an average thickness within a range between any of the minimum and maximum values noted above.

The electrolyte layer 101 can be formed via casting, deposition, printing, extruding, lamination, die-pressing, gel casting, spray coating, screen printing, roll compaction, injection molding, and a combination thereof. The electrolyte layer 101 can be formed individually or subsequently to formation of other layers. For example, the electrolyte layer 101 can be formed on one of the other previously-formed layers (e.g., the electrode layer 103). Notably, in a particular embodiment, the formation of the electrolyte layer 101 includes formation of a green layer of material, which is not necessarily sintered before forming a green unit cell 100, which is then sintered in a single free-sintering process.

The electrolyte layer 101 can be formed from a powder electrolyte material having a particular particle size that facilitates formation of a unit cell according to the embodiments herein. For example, the powder electrolyte material can have an average particle size of less than about 100 µm (microns), such as less than about 50 µm (microns), less than about 20 µm (microns), less than about 10 µm (microns), than about 5 µm (microns), or even less than about 1 micron. Still, in particular instances, the average particle size of the powder electrolyte material can be at least about 0.01 µm (microns), at least about 0.05 µm (microns), at least about 0.08 µm (microns), at least about 0.1 µm (microns), or even at least about 0.2 µm (microns). It will be appreciated that the powder electrolyte material can have an average particle size within a range including any of the minimum and maximum values noted above.

The interconnect layer 107 can include a ceramic material, including an inorganic material. In particular, the interconnect layer can include an oxide material, and more particularly, can be a chromite or nickel oxide material. More particularly, the interconnect layer 107 can include an element selected from the group consisting of lanthanum (La), manganese (Mn), strontium (Sr), titanium (Ti), niobium (Nb), calcium (Ca), gallium (Ga), cobalt (Co), yttria (Y), and a combination thereof. In certain instances, the interconnect layer 107 can include a chromium oxide-based materials, nickel oxide-based materials, cobalt oxide-based materials, and titanium oxide-based materials (e.g., lanthanium strontium titanate). In particular, the interconnect layer 107 can be made of a material, such as LaSrCrO₃, LaMnCrO₃, LaCaCrO₃, YCrO₃, LaCrO₃, LaCoO₃, CaCrO₃, CaCoO₃, LaNiO₃, LaCrO₃, CaNiO₃, CaCrO₃, and a combination thereof. In particular, the interconnect layer 107 can comprise LST (or YST), and may consist essentially of Nb doped LST, such as, La_{0.2} Sr_{0.8}TiO₃, having one or more dopants. It will be appreciated, that the interconnect material may include an A-site deficient material, wherein for example, the lattice sites typically occupied by lanthanum or strontium cations are vacant, and thus the material has a non-stoichiometric composition.

The interconnect layer 107 can be a particularly thin, planar layer of material. For example, the interconnect layer 107 can have an average thickness of not greater than about 1 mm, such as not greater than about 500 µm (microns), such as not greater than about 300 µm (microns), not greater than about 200 µm (microns), not greater than about 100 µm (microns), not greater than about 80 µm (microns), not greater than about 50 µm (microns), or even not greater than about 25 µm (microns). Still, the interconnect layer 107 can have an average thickness of at least about 1 µm (micron), such as at least about 2 µm (microns), at least about 5 µm (microns), at least about 8 µm (microns), or at least about 10 µm (microns). It will be appreciated that the average thickness of the interconnect layer 107 can have an average thickness within a range between any of the minimum and maximum values noted above.

The interconnect layer 107 can be formed using a process similar to the formation of the electrolyte layer 101, including for example, casting, deposition, printing, extruding, lamination, die-pressing, gel casting, spray coating, screen printing, roll compaction, injection molding, and a combination thereof. The interconnect layer 107 can be formed individually, or subsequently to formation of other layers, such that the interconnect layer 107 can be formed on one of the other previously-formed layers (e.g., the electrode layer 103). Notably, in a particular embodiment, the formation of the interconnect layer 107 includes formation of a green layer of material, which is not necessarily sintered before forming a green unit cell 100, which his then sintered in a single free-sintering process.

The interconnect layer 107 can have a coefficient of thermal expansion (CTE) that may be substantially the same as the CTE of the electrolyte layer 101. In particular instances, the CTE of the interconnect layer 107 can be essentially the same as the CTE of the electrolyte layer 101.

The interconnect layer 107 can be formed from a powder interconnect material having a particular particle size that facilitates formation of a unit cell according to the embodiments herein. For example, the powder interconnect material can have an average particle size of less than about 100 µm (microns), such as less than about 50 µm (microns), less than about 20 µm (microns), less than about 10 µm (microns), less than about 5 µm (microns), or even less than about 1 µm (micron). Still, in particular instances, the average particle size of the powder interconnect material can be at least about 0.01 µm (microns), at least about 0.05 µm (microns), at least about 0.08 µm (microns), at least about 0.1 µm (microns), at least about 0.2 µm (microns), or even at least about 0.4 µm (microns). It will be appreciated that the powder interconnect material can have an average particle size within a range including any of the minimum and maximum values noted above.

The SOFC unit cell 100 can include an electrode layer 103 disposed between the electrolyte layer 101 and the interconnect layer 107, which can also be unsintered (i.e., green). In particular, the electrode layer 103 can be in direct contact with the electrolyte layer 101. Additionally, the electrode layer 103 can be in direct contact with the interconnect layer 107. In fact, in certain instances, there may not necessarily be any intervening buffer layers between the electrode layer 103 and the electrolyte layer 101, or between the electrode layer 103 and the interconnect layer 107.

The electrode layer 103 can have a coefficient of thermal expansion (CTE) that is different than a CTE of the interconnect layer 107. Furthermore, the CTE of the electrode layer 103 can be different than the CTE of the electrolyte layer 101. In particular instances, the CTE of the electrode layer 103 can be more than the CTE of the electrolyte layer 101. In certain other examples, the CTE of the electrode layer 103 can be more than the CTE of the interconnect layer 107.

According to one embodiment, the electrode layer 103 can be an anode. In particular instances, the anode can be cermet material, that is, a combination of a ceramic and metallic material. Some suitable metals can include transition metal species, including for example, nickel or copper. The anode can include an ionic conductor, including for example, a ceramic material, and particularly, an oxide material. For example, the anode may be formed with nickel and a zirconia-based material, including for example, yttria-stabilized zirconia. Alternatively, the anode can include a ceria-based material, including for example, gadolinium oxide-stabilized ceria. The nickel can be produced through the reduction of nickel oxide included in the anode green material. Alternatively, it will be appreciated that certain other types of oxide materials may be used in the electrode layer 103, and particularly the anode, such as titanites, manganites, chromites, a combination thereof, and the like. It will be appreciated, that such oxides may also be perovskite materials.

The electrode layer 103 can be a thin and substantially planar layer of material. The electrode layer 103 can have an average thickness that is greater than the average thickness of the electrolyte layer 101 or the interconnect layer 107. For example, the electrode layer 103 can have an average thickness of at least about 100 µm (microns), such as at least about 300 µm (microns), at least about 500 µm (microns), at least about 700 µm (microns), or even at least about 1 mm. Still, the electrode layer 103can have an average thickness of not greater than about 5 mm, such as not greater than about 2 mm, not greater than about 1.5 mm, or even not greater than about 1 mm. It will be appreciated that the average thickness of the electrode layer 103 can have an average thickness within a range between any of the minimum and maximum values noted above.

The electrode layer 103 can be formed from a powder electrode material having a particular particle size that facilitates formation of a unit cell according to the embodiments herein. For example, the powder electrode material can have an average particle size of less than about 100 µm (microns), such as less than about 50 µm (microns), less than about 20 µm (microns), less than about 10 µm (microns), less than about 5 µm (microns), or even less than about 1 µm (micron). Still, in particular instances, the average particle size of the powder electrode material can be at least about 0.01 µm (microns) at least about 0.05 µm (microns), at least about 0.08 µm (microns), at least about 0.1 µm (microns), at least about 0.2 µm (microns), or even at least about 0.4 µm (microns). It will be appreciated that the powder electrode material can have an average particle size within a range including any of the minimum and maximum values noted above.

The electrode layer 103 can be a porous layer. The porosity may be in the form of channels, which can be utilized to deliver fuel to the SOFC article. The channels may be arranged in a particular manner, such as in a regular and repeating pattern throughout the volume of the electrode layer 103. Any suitable techniques may be used to form the porosity and/or channels, including for example, incorporating shaped fugitives, embossing, cutting channels in tapes and then laminating the tapes to define channels, using extrusion through preforms, using patterned rolls in roll compaction.

There exists a variety of possible materials for fugitives, such as, for example, graphite or fibers that can be used to form the channels or passageways within the cathode and anode layers. The fugitives can be selected from materials that will vaporize or out-gas during heat treatment to form the SOFC article. In one embodiment, the fugitives can be an organic material. Certain suitable examples of fugitives include natural fibers, cotton, bast fibers, cordage fibers, or animal fibers, such as wool. Alternatively, the fugitives can be manufactured material such as, regenerated cellulose, cellulose diacetate, cellulose triacetate, starch, polyamide, polyester, polyacrylic, polyvinyl, polyolefin resins, carbon or graphite fibers, or liquid crystal polymers. The fugitives may also be a binder material, such as synthetic rubber, thermoplastics, or polyvinyl and plasticizer material such as glycol and phthalate groups. In another embodiment, the material can be pasta, such as spaghetti.

According to one embodiment, the SOFC unit cell 100 can include a green interconnect layer 107, a green electrode layer 103 (i.e., an anode), and a green electrolyte layer 101 that can be formed together in a firing process to sinter each of the component layers together and form a unified and integral, co-sintered SOFC unit cell. In one particular embodiment, the firing process (i.e., a co-firing process) can be a free-sintering process, wherein the green SOFC unit cell 100 is fired under ambient pressure. That is, external pressure is not necessarily applied to the SOFC unit cell 100 during sintering. The free-sintering process can be conducted at a pressure that is substantially atmospheric pressure taking into account the change in temperature and the atmosphere used during sintering.

In one embodiment, the free-sintering process can include heating the SOFC unit cell to a sintering temperature of at least about 800°C, such as at least about 900°C, at least about 1000°C, or even at least about 1100°C. In certain instances, the sintering temperature can be not greater than about 1500°C, not greater than about 1400°C, or even not greater than about 1300°C. It will be appreciated that the sintering temperature can be within a range between any of the minimum and maximum temperatures noted above.

The free-sintering process can include an isothermal treatment. For example, the SOFC unit cell 100 can be held at the sintering temperature for a particular duration. The duration of isothermal treatment can be at least about 10 minutes, such as at least about 20 minutes, such as at least about 30 minutes, such as at least about 40 minutes, at least about 50 minutes, at least about 60 minutes, or even at least about 90 minutes. Still, the duration of isothermal treatment can be not greater than about 600 minutes, not greater than about 500 minutes, not greater than about 400 minutes, not greater than about 300 minutes, not greater than about 200 minutes, or even not greater than about 120 minutes. It will be appreciated that the duration of isothermal hold at the sintering temperature can be within a range between any of the minimum and maximum durations noted above.

The free-sintering process may utilize a particular sintering atmosphere. Suitable atmospheres can include inert species, such that reactions with the component layers of the SOFC unit cell 100 are limited. During free-sintering the atmosphere may be held at a pressure of not greater than about 101325 Pa (1 atm). Accordingly, the pressure on the unit cell during isothermal treatment may be within a range between about 1.01325 * 10⁻¹⁵ Pa and about 101325 Pa (about 10⁻²⁰atm and about 1 atm), such as between about 1.01325 * 10⁻⁵ Pa and about 101325 Pa (about 10⁻¹⁰atm and about 1 atm), or even between about 10.1325 and about 101325 Pa about (10⁻⁴atm and about 1 atm). In other instances, the free-sintering process can be conducted in an atmosphere having a partial pressure of oxygen lower than ambient conditions. In another embodiment, the free-sintering process can include a reducing agent, and more particularly, may be a reducing atmosphere relative to the SOFC unit cell.

More particularly, the free-sintering process can be conducted at a sintering temperature, wherein the electrolyte layer 101 can be in compression and the electrode layer 103 can be in tension. Notably, certain characteristics of the green electrolyte layer 101, green electrode layer 103, and green interconnect layer 107, including for example, a combination of morphological characteristics, physical characteristics, and chemical characteristics of the material can be used to facilitate the free sintering process and the formation of a unit cell and ultimately a SOFC stack having the characteristics described herein. Without wishing to be tied to a particular theory, it is thought that a combination of characteristics, such as particle size distribution of the powder components, packing factor, porosity, chemical composition of each of the component layers, thermal expansion properties, and the like can facilitate a free-sintering process, wherein the electrolyte layer 101 is in compression during isothermal treatment.

Notably, the electrolyte layer 101 can have a particular sintering temperature, which can be related to the dimensions of the layer at a particular temperature. For example, according to one embodiment, the electrolyte layer 101 can have an electrolyte sintering temperature different than a sintering temperature of the material of the electrode layer 103 (i.e., electrode sintering temperature) and different than a sintering temperature of the interconnect layer 107 (i.e., interconnect sintering temperature). In particular instances, the electrolyte layer 101 can have a sintering temperature less than a sintering temperature of the electrode layer 103 and less than a sintering temperature of the interconnect layer 107.

The free-sintering process, and particularly the isothermal hold, is conducted at a sintering temperature above the electrolyte sintering temperature. That is, free-sintering is conducted at a temperature above the electrolyte sintering temperature, below the electrode sintering temperature, and above the interconnect sintering temperature.

Upon completing the free-sintering process, the interconnect layer 107, electrode layer 103, and electrolyte layer 101 form an integral SOFC unit cell 100. Additional steps may be undertaken to join additional layers to the integral SOFC unit cell 100 and form a functioning SOFC article. For example, a second sintering process can be completed to join the integral SOFC unit cell 100 with other layers, including but not limited to, an electrode layer different than the electrode layer 103. The second sintering process can be separate from the first, free-sintering process.

For example, in a particular embodiment, the post-free-sintering process can include formation of a second electrode layer, or a portion of a second electrode layer, overlying the integral SOFC unit cell 100. The second electrode layer can be different than the electrode layer 103, and in particular, may be a cathode layer. The cathode can be pre-formed into an integral cathode unit cell through a separate sintering process, before being joined with the integral SOFC unit cell 100 to form a final SOFC article. Alternatively, the cathode or other layers may be green layers, which are formed on and joined with the integral SOFC unit cell 100 and thermally processed in a second sintering process directly on the integral SOFC unit cell 100. The second sintering process can be a free-sintering process. The second sintering process can be conducted at a bonding or joining sintering temperature that is significantly below the first sintering temperature. For example, the joining temperature can be below the sintering temperature used to form the SOFC unit cell (i.e., the first free-sintering temperature). Moreover, the joining temperature can be below the sintering temperature used to form the integral cathode unit cell. In particular instances, the joining temperature can be at least about 5°C, such as at least about 8°C, at least about 10°C, or even at least about 12°C below the sintering temperature used to form the cathode integral unit cell.

The joining process noted in the foregoing paragraph may be undertaken according to alternative processing routes. For example, the joining process can be a two-step process, wherein the SOFC unit cell can be formed as described herein in a single, free-sintering process, while a second electrode layer (e.g., cathode portion) can be formed and joined in a green state with the sintered SOFC unit cell. The joining process of the two-step process can utilize a joining temperature that is different than the sintering temperature, and particularly, a lower joining temperature than the sintering temperature used in the free-sintering process for forming the SOFC unit cell.

In another embodiment, the joining process can be a three-step process, wherein the SOFC unit cell can be formed as described herein in a single, free-sintering process, while a second electrode layer (e.g., cathode portion) can be formed and sintered separately from the SOFC unit cell. The sintered SOFC unit cell and sintered second electrode layer can be joined in a third thermal treatment. The third thermal treatment can utilize a joining temperature that is different than the sintering temperatures used to form the SOFC unit cell or second electrode. In particular, the joining temperature can be a lower temperature than the sintering temperature used in the free-sintering process for forming the SOFC unit cell and a lower temperature than the sintering temperature used in forming the sintered second electrode layer.

The second electrode (e.g., cathode) or portion of the second electrode can be formed such that it is overlying the interconnect layer 107. In fact, the second electrode can be directly contacting and bonded to the interconnect layer 107. Alternatively, or additionally, the second electrode can be overlying the electrolyte layer 101, such that the electrolyte layer 101 can be disposed between the electrode layer 103 (e.g., anode) and the second electrode layer (e.g., cathode). The second electrode layer 103 can be in direct contact with the electrolyte layer 101.

In one embodiment, the second electrode can be a cathode, which can be made of an inorganic material. Certain suitable inorganic materials can include oxides. The cathode can include a rare earth element. In at least one embodiment, the cathode can include elements such as lanthanum (La), manganese (Mn), strontium (Sr), and a combination thereof.

In one particular embodiment, materials for the cathode can include lanthanum manganite materials. The cathode can be made of a doped lanthanum manganite material, giving the cathode composition a perovskite type crystal structure. Accordingly, the doped lanthanum manganite material has a general composition represented by the formula, (La₁₋ₓAₓ)_{y}MnO_{3-δ}, where the dopant material is designated by "A" and is substituted within the material for lanthanum (La), on the A-sites of the perovskite crystal structure. The dopant material can be selected from alkaline earth metals, lead, or generally divalent cations having an atomic ratio of between about 0.4 and 0.9 Angstroms. As such, according to one embodiment, the dopant material is selected from the group of elements consisting of Mg, Ba, Sr, Ca, Co, Ga, Pb, and Zr. According to a particular embodiment, the dopant is Sr, and the cathode material is a lanthanum strontium manganite material, known generally as LSM.

Referring to the stoichiometry of the doped lanthanum manganite cathode material, according to one embodiment, parameters such as the type of atoms present, the percentage of vacancies within the crystal structure, and the ratio of atoms, particularly the ratio of La/Mn within the cathode material, are provided to manage the formation of conductivity-limiting compositions at the cathode/electrolyte interface during the operation of the fuel cell. The formation of conductivity-limiting compositions reduces the efficiency of the cell and reduces the lifetime of the SOFC. According to one embodiment, the doped lanthanum manganite cathode material comprises (La₁₋ₓAₓ)_{y}MnO_{3-δ}, wherein x is not greater than about 0.5, y is not greater than about 1.0, and the ratio of La/Mn is not greater than about 1.0. The value of x within the doped lanthanum manganite composition represents the amount of dopant substituted for La within the structure. According to one embodiment, x is not greater than about 0.5, such as not greater than about 0.4 or 0.3. Still, the amount of dopant provided within the cathode material may be less, such that x is not greater than about 0.2, or still 0.1, and particularly within a range of between about 0.4 and 0.05.

In a particular embodiment, the dopant material is Sr (an LSM cathode), such that the cathode composition is (La₁₋ₓSrₓ)_{y}MnO_{3-δ}, where x is not greater than about 0.5, such as not greater than about 0.4, 0.3, 0.2 or even not greater than about 0.1, and particularly within a range of between about 0.3 and 0.05. A cathode having a dopant concentration as described in the previous embodiments is desirable for reducing the formation of conductivity-limiting compositions at the cathode/electrolyte interface during the operation of the fuel cell.

In further reference to the stoichiometry of the cathode, the value of y in the general formula (La₁₋ₓAₓ)_{y}MnO_{3-δ} represents the percent occupancy of atoms on the A-site within the crystal lattice. Thought of another way, the value of y may also be subtracted from 1.0 and represent the percentage of vacancies on the A-site within the crystal lattice. For the purposes of this disclosure, a doped lanthanum manganite material having a value of y less than 1.0 is termed an "A-site deficient" structure, since the A-sites within the crystal structure are not 100% occupied. According to one embodiment, y is not greater than about 0.95, such as not greater than about 0.90, 0.88, or even not greater than about 0.85. In a particular embodiment, the cathode material is LSM (the dopant material is Sr having a composition of (La₁₋ₓSrₓ)_{y}MnO_{3-δ}, and the value of y is not greater than about 1.0, such as not greater than about 0.95, 0.93 or even 0.90, and particularly within a range of between about 0.70 and 0.99. A cathode having an A-site deficient, doped lanthanum manganite composition, as provided in the previously described embodiments, is desirable for reducing the formation of conductivity-limiting compositions at the cathode/electrolyte interface during the operation of the fuel cell.

In further reference to the composition of the doped lanthanum manganite cathode material, according to one embodiment, the ratio of La/Mn is not greater than about 1.0. The ratio of La/Mn within the cathode material can be modified by the addition of a dopant (the value of x in the general formula) as well as the creation of A-site vacancies (related to the value of y) within the lanthanum manganite crystal structure. As such, in another embodiment, the ratio of La/Mn is less than 1.0, such as less than about 0.97, 0.95, or even less than about 0.93. According to a particular embodiment, the cathode material is LSM having a general composition of (La₁₋ₓSrₓ)_{y}MnO_{3-δ}, wherein x is not greater than about 0.5, y is not greater than about 1.0, and the ratio of La/Mn is not greater than 1.0. Accordingly, the ratio of La/Mn within the LSM cathode material may be less than about 1.0, such as less than about 0.97, 0.95 or even 0.90. Generally, a ratio of La/Mn of not greater than 1.0, and particularly less than 1.0, provides a desirable stoichiometric condition that reduces the formation of conductivity-limiting compositions at the cathode/electrolyte interface during operation of the SOFC. The formation of such conductivity-limiting compositions may reduce the efficiency and the operable lifetime of the SOFC.

Alternatively, or additionally, the material of the cathode can include a La-ferrite based material. Typically, the La-ferrite based material can be doped with one or more suitable dopants, such as Sr, Ca, Ba, Mg, Ni, Co or Fe. Examples of doped La-ferrite based materials include LaSrCo-ferrite (LSCF) (e.g., La_{1-g}Sr_{q}Co₁₋ⱼFeⱼO₃, where each of q and j independently is equal to or greater than 0.1, and equal to or less than 0.4 and (La+Sr)/(Fe+Co) is in a range of between about 1.0 and about 0.90 (molar ratio). In one specific embodiment, the cathode can include a mixture of a La-manganite and La-ferrite material. For example, the cathode can include a LaSr-manganite (LSM) (e.g., La₁₋ₖSrₖMnO₃) and a LaSrCo-ferrite (LSCF). Common examples include (La_{0.8}Sr_{0.2}) _{0.98}Mn_{3+-Δ} (Δ is equal to or greater than zero, and equal to or less than 0.3) and La_{0.6}Sr_{0.4}Co₄₂Fe_{0.8}O₃.

FIG. 2 includes an illustration of a SOFC unit cell in accordance with an embodiment. The SOFC unit cell 200 can include an electrolyte layer 101, an interconnect layer 107, and an electrode layer 103 disposed between the electrolyte layer 101 and the interconnect layer 107. In particular, the electrolyte layer 101 can be in direct contact with the electrode layer 103. The interconnect layer 107 can be in direct contact with the electrode layer 103. Notably, like previously described embodiments, the unit cell 200 can represent a plurality of green layers that are stacked together prior to thermal treatment and a plurality of layers integrally formed together after conducting a single, free-sintering process.

Notably, the anode layer 103 can be made of a plurality of layers including a functional layer portion 203, a bulk layer portion 202, and a bonding layer portion 201. The anode functional layer portion 203 can be in direct contact with the electrolyte layer 101. More particularly, the anode functional layer portion 203 can be directly bonded to the electrolyte layer 101. The anode functional layer portion 203 can include the same materials as the anode layer 103 described herein. The anode functional layer portion 203 can facilitate suitable electrical and electrochemical characteristics of the finished SOFC article, and improve electrical and mechanical connection between the anode layer 103 and the electrolyte layer 101.

According to one embodiment, the anode functional layer portion 203 can be a porous layer, having a porosity within a range between about 20 vol% and about 50 vol%, for the total volume of the anode functional layer portion 203. The anode functional layer 203 can have an average pore size that is significantly smaller than an average pore size of pores within the anode bulk layer 202.

In particular instances, the green material of the anode functional layer portion 203 can be formed of a relatively fine agglomerated powder. Alternatively, the powder material may be unagglomerated. The powder can have an average particle size not greater than about 100 microns, such as not greater than about 75 µm (microns), and in certain embodiments, not greater than about 45 µm (microns). Additionally, the powder can be a mixture of agglomerated and unagglomerated powders, wherein the unagglomerated powder may have a notably finer particle size. Such sizes can facilitate formation of suitable pore sizes and grain sizes within the anode functional layer portion 203.

The anode functional layer portion 203 can be a thin and substantially planar layer of material, having an average thickness of not greater than about 1 mm, such as not greater than about 700 µm (microns), not greater than about 500 µm (microns), not greater than about 200 µm (microns), not greater than about 150 µm (microns), such as not greater than about 100 µm (microns), or even not greater than about 50 µm (microns). Still, the anode functional layer portion 203 can have an average thickness of at least about 0.5 µm (microns), such as at least about 1 µm (micron), at least about 5 µm (microns), at least about 10 µm (microns), at least about 15 µm (microns), or even at least about 20 µm (microns). It will be appreciated that the anode functional layer portion 203 can have an average thickness within a range between any of the minimum and maximum values noted above.

The anode bulk layer portion 202 can be directly in contact with the functional layer portion 203 and the bonding layer portion 201. More particularly, the bulk layer portion 202 can be directly bonded to the functional layer portion 203 and the bonding layer portion 201. The anode bulk layer portion 202 can include the same materials as the anode layer 103 described herein.

The anode bulk layer portion 202 can be a porous layer, having a porosity within a range between about 30 vol% and about 60 vol%, for the total volume of the anode bulk layer portion 202. The anode bulk layer 202 can have an average pore size that is significantly greater than an average pore size of pores within the anode functional layer portion layer 203 or the anode bonding layer portion 201. In particular, the bulk layer portion 202 can contain channels for delivery of the fuel to the anode layer 103, and particularly the functional layer portion 203.

The green material of the anode bulk layer portion 202 can be formed of a generally coarser material than the functional layer portion 203 or the bonding layer portion 201. In particular instances, the anode bulk layer portion 202 can be formed of an agglomerated powder. The agglomerates may have an average particle size of between about 1 micron and about 300 µm (microns), such as between about 1 µm (micron) and about 200 µm (microns), or even between about 1 µm (micron) and about 100 µm (microns). In particular embodiments, coarse particles may be used instead of, or in addition to, an agglomerated powder. The coarse particles can have an average particle size within a range between about 0.1 µm (microns) and about 100 µm (microns), such as between about 0.1 µm (microns) and about 50 µm (microns), or even between about 0.1 µm (micron), and about 15 µm (microns). The anode bulk layer portion 202 can be a thin and substantially planar layer of material, having an average thickness that is greater than the average thickness of the anode functional layer portion 203 or the anode bonding layer portion 201. In particular, the anode bulk layer portion 202 can have an average thickness not greater than about 2 mm, such as not greater than about 1 mm, or not greater than about 800 µm (microns). Still, the anode bulk layer portion 202 can have an average thickness of at least about 50 µm (microns), such as at least about 100 µm (microns), at least about 200 µm (microns), or at least about 500 µm (microns). It will be appreciated that the anode bulk layer portion 202 can have an average thickness within a range between any of the minimum and maximum values noted above.

The anode bonding layer portion 201 can be directly in contact with the anode bulk layer portion 202 and the interconnect layer 107. More particularly, the bonding layer portion 201 can be directly bonded to the bulk layer portion 202 and the interconnect layer 107. The anode bonding layer portion 202 can include the same materials as the anode layer 103 described herein.

The anode bonding layer portion 201 can be a porous layer, having a porosity within a range between about 0 vol% and about 40 vol%, for the total volume of the anode bonding layer portion 201. The anode bonding layer portion 201 can have an average pore size that is significantly less than an average pore size of pores within the anode bulk layer portion 202. The anode bonding layer portion 201 can facilitate suitable electrical characteristics of the finished SOFC article, and improve a mechanical connection between the anode layer 103 and the interconnect layer 107.

The green material of the anode bonding layer portion 201 can be formed of a generally finer material than the anode bulk layer portion 202. In particular instances, the green material of the anode bonding layer portion 201 can be formed of a relatively fine agglomerated powder. The fine agglomerated powder can have an average agglomerate size not greater than about 100 µm (microns), such as not greater than about 75 µm (microns), not greater than about 45 µm (microns), or even not greater than about 20 µm (microns). Still, the average particle size of the fine agglomerated powder can be at least about 0.5 µm (microns), such as at least about 1 µm (micron), or at least about 5 µm (microns). It will be appreciated, that the average particle size of the fine agglomerated powder can be within a range between any of the minimum and maximum values noted above. Additionally, the fine agglomerated powder can be mixed with a largely unagglomerated powder, having a notably finer particle size. Alternatively, the fine agglomerated powder may be partially or wholly substituted with unagglomerated particles. The particular sizes of powder material can facilitate formation of suitable pore sizes and grain sizes within the anode bonding layer portion 201.

The anode bonding layer portion 201 can be a thin and substantially planar layer of material having an average thickness that is less than the average thickness of the anode bulk layer portion 202. In particular, the anode bonding layer portion 201 can have an average thickness of not greater than about 1 mm, such as not greater than about 700 µm (microns), not greater than about 500 µm (microns), or even not greater than about 200. Still, the anode bonding layer portion 201 can have an average thickness of at least about 1 µm (micron), such as at least about 5 µm (microns), at least about 10 µm (microns), at least about 20 µm (microns), such as at least about 50 µm (microns), at least about 75 µm (microns), at least about 100 µm (microns). It will be appreciated that the anode bonding layer portion 201 can have an average thickness within a range between any of the minimum and maximum values noted above.

The layers of the SOFC unit cell 200 can be formed according to the embodiments herein, including techniques such as, casting, deposition, printing, extruding, lamination, die-pressing, gel casting, spray coating, screen printing, roll compaction, injection molding, and a combination thereof.

The SOFC unit cell 200 can be formed according to the processes described in the embodiments herein. In particular, the process of forming can include assembling green layers of material as illustrated in the SOFC unit cell 200, and conducting a single, free-sintering process to form an integral SOFC unit cell 200, wherein each of the layers are bonded to each other characterized by diffusion bonds at the interfaces of the material layers. Furthermore, it will be appreciated that after free-sintering to form the integral SOFC unit cell 200, other component layers can be added, including but not limited to, one or more second electrode layers (e.g., cathode layers).

FIG. 3 includes an illustration of a SOFC unit cell in accordance with an embodiment. The SOFC unit cell 300 can include an electrolyte layer 101, an interconnect layer 107, and an electrode layer 103 disposed between the electrolyte layer 101 and the interconnect layer 107. Additionally, the SOFC unit cell 300 can include a portion of an electrode layer 301 underlying the electrolyte layer 101. The portion of the electrode layer 301 can be in direct contact with the electrolyte layer 101. Additionally, the SOFC unit cell 300 can include a portion of an electrode layer 303 overlying the interconnect layer 107. The portion of the electrode layer 303 can be in direct contact with the interconnect layer 107.

Notably, like previously described embodiments, the SOFC unit cell 300 can represent a plurality of green layers that are stacked together prior to thermal treatment. Alternatively, or additionally, the SOFC unit cell 300can represent a plurality of layers integrally formed together after conducting a single, free-sintering process.

According to one embodiment, the portion of the electrode layer 301 can be a cathode functional layer portion. In particular, the cathode functional layer portion 301 can be a green functional layer portion in direct contact with a green electrolyte layer 101. The cathode functional layer portion 301 can include the same materials as cathodes described herein. Moreover, the cathode functional layer portion 301 can include a combination of materials, such as a combination of materials from the cathode bulk layer portion and the electrolyte layer or interconnect layer. For example, the cathode functional layer portion 301 can include a combination of LSM and YSZ. The cathode functional layer portion 301 can have the same characteristics of other functional layer portions as described herein. Moreover, the cathode functional layer portion 301 may facilitate suitable electrical characteristics of the finished SOFC article, and improve electrical, electro-chemical, and mechanical connection between the electrolyte layer 101 and the cathode.

The portion of the electrode layer 301 can be a thin and substantially planar layer of material having an average thickness that is less than the average thickness of the anode 203. In particular, the portion of the electrode layer 301 can have an average thickness of not greater than about 1 mm, such as not greater than about 700 µm (microns), not greater than about 500 µm (microns), not greater than about 200 µm (microns), not greater than about 150 µm (microns), such as not greater than about 100 µm (microns), or even not greater than about 50 µm (microns). Still, the portion of the electrode layer 301 can have an average thickness of at least about 0.5 µm (microns), such as at least about 1 µm (micron), at least about 5 µm (microns), at least about 10 µm (microns), at least about 15 µm (microns), or even at least about 20 µm (microns). It will be appreciated that the portion of the electrode layer 301 can have an average thickness within a range between any of the minimum and maximum values noted above.

The portion of the electrode layer 301 can be a porous layer. In particular embodiments, the portion of the electrode layer 301 can have a porosity within a range between about 20 vol% and about 50 vol%, for the total volume of the portion of the electrode layer 301. The portion of the electrode layer 301 may have an average pore size that is significantly less than an average pore size of pores within the bulk layer portion of the anode 103.

It will be appreciated that the portion of the electrode 303 overlying the interconnect layer 107 can have the same attributes as the portion of the electrode 301. In particular, the portion of the electrode 303 can be a cathode functional layer portion 303.

The layers of the SOFC unit cell 300, and particularly the portions of the electrode 303 and 301, can be formed according to the embodiments herein, including techniques such as, casting, deposition, printing, extruding, lamination, die-pressing, gel casting, spray coating, screen printing, roll compaction, injection molding, and a combination thereof.

The SOFC unit cell 300 can be formed according to processes described in the embodiments herein. In particular, the forming of the SOFC unit cell 300 can include assembling green layers of material as illustrated into a green SOFC unit cell 300, and conducting a single, free-sintering process to form an integral SOFC unit cell 300. The integral SOFC unit cell 300 is characterized by each of the abutting layers being bonded to each other and forming a diffusion bond region at the interfaces between the material layers. Furthermore, it will be appreciated that after free-sintering to form the integral SOFC unit cell 300, other component layers can be added, including but not limited to, one or more second electrode layers (e.g., bulk cathode layers and/or bonding cathode layers).

The formation of the integral SOFC unit cell 300 is particularly desirable since primarily all component layers (i.e., cathode/interconnect/anode/electrolyte) suitable for forming a working SOFC article are formed in a single, free-sintering process. Thus, all of the layers can be formed in a single, free-sintering process to form an integrally bonded SOFC unit cell 300 with limited post-processing (i.e., thermal treatment after the free-sintering process). Additionally, the single, free-sintering process can be completed such that the electrolyte layer 101 is in compression during the isothermal hold at the sintering temperature. The electrolyte layer 101 can also be in compression after completion of the sintering process.

Moreover, remaining processing of the integral SOFC unit cell 300 can be limited and generally include joining of layers having similar or the same compositions. That is for example, a bulk cathode layer can be attached to either of the cathode portions 301 or 303 in a separate, second sintering process. Moreover, because the post-processing may be limited to bonding between layers of like composition, the separate, second sintering process can be conducted at significantly lower sintering temperatures than utilized in the first, free-sintering process. Furthermore, because post-free-sintering processing may be limited to layers of like material, mechanical strains between the layers (e.g., due to CTE mismatch) are also limited, resulting in a SOFC article, having improved mechanical and electrical characteristics.

FIG. 4 includes an illustration of a SOFC unit cell in accordance with an embodiment. The SOFC unit cell 400 includes a construction like the SOFC unit cell 200 with the addition of portions of electrode layers 301 and 303 overlying the electrolyte layer 101 and interconnect layer 107, respectively. In particular, the SOFC unit cell 400 includes an electrolyte layer 101, an interconnect layer 107, and an electrode layer 103 disposed between the electrolyte layer 101 and the interconnect layer 107. In particular, the electrolyte layer 101 can be in direct contact with the electrode layer 103 and the interconnect layer 107 can be in direct contact with the electrode layer 103.

The electrode layer 103 can be an anode layer and made of a plurality of layers including a functional layer portion 203, a bulk layer portion 202, and a bonding layer portion 201, having features as described in the other embodiments herein.

The SOFC unit cell 400 also includes a portion of an electrode layer 301 underlying the electrolyte layer 101. The portion of the electrode layer 301 can be in direct contact with the electrolyte layer 101. Additionally, the SOFC unit cell 400 can include a portion of an electrode layer 303 overlying the interconnect layer 107. The portion of the electrode layer 303 can be in direct contact with the interconnect layer 107. According to one embodiment, the portion of the electrode layer 301 can be a cathode functional layer portion having any features of cathode functional layer portions as described in the embodiments herein. Likewise, the portion of the electrode layer 303 can be a cathode functional layer portion having any features of cathode functional layer portions as described in the embodiments herein. The cathode functional layer portions 301 and 303 may facilitate suitable electrical characteristics of the finished SOFC article, and improve electrical and mechanical connections.

The SOFC unit cell 400 can be formed according to processes described in the embodiments herein. In particular, forming of the SOFC unit cell 400 can include assembling green layers of material as illustrated into a green SOFC unit cell 400, and conducting a single, free-sintering process to form an integral SOFC unit cell 400. The integral SOFC unit cell 400 is characterized by each of the abutting layers being bonded to each other and forming a diffusion bond region at the interfaces between the material layers. Furthermore, it will be appreciated that after free-sintering to form the integral SOFC unit cell 400, other component layers can be added, including but not limited to, one or more second electrode layers (e.g., bulk cathode layers and/or bonding cathode layers).

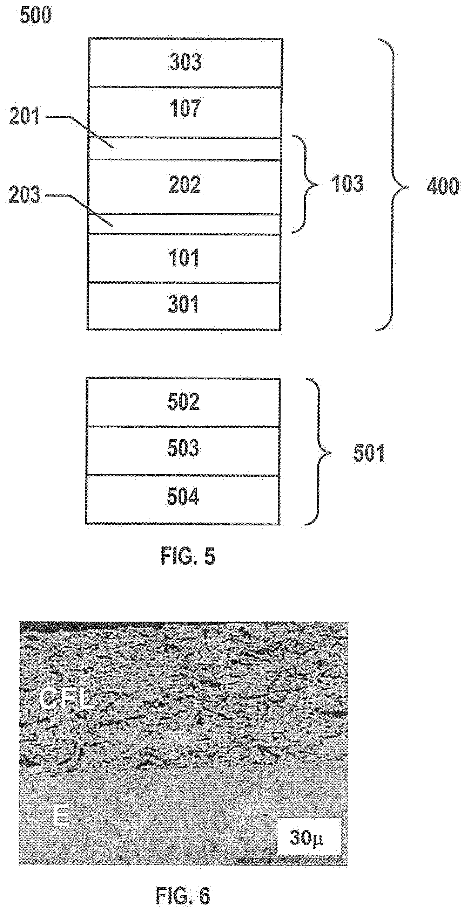

FIG. 5 includes an illustration of a SOFC unit cell in accordance with another embodiment. The SOFC unit cell 500includes a first SOFC unit cell 400 having the same construction and method of making as described in embodiments herein. The SOFC unit cell 500 can include a second SOFC unit cell 501 that can be an electrode or a portion of an electrode. The SOFC unit cell 501 can include a bonding layer portion 504, a bulk layer portion 503 overlying the bonding layer portion 504, and a bonding layer portion 502 overlying the bulk layer portion 502. In particular instances, the SOFC unit cell 501 can be a cathode, wherein the layers include a cathode bonding layer portion 504, a cathode bulk layer portion 503 overlying the cathode bonding layer portion 504, and a cathode bonding layer portion 502 overlying the cathode bulk layer portion 502. The cathode bonding layer portion 504, cathode bulk layer portion 503, and cathode bonding layer portion 502 can have any of the characteristics of other cathode layers as described in embodiments herein.

The SOFC unit cell 501 can be formed according to processes described in the embodiments herein. In particular, forming of the SOFC unit cell 501 can include assembling green layers of material as illustrated into a green SOFC unit cell 501, and conducting a single, free-sintering process to form an integral SOFC unit cell 501. The integral SOFC unit cell 501 can be characterized by each of the abutting layers being bonded to each other and forming a diffusion bond region at the interfaces between the material layers.

Furthermore, it will be appreciated that after free-sintering to form the integral SOFC unit cell 501, the SOFC unit cell 501 can be joined to the integral SOFC unit cell 400 to form a SOFC article. In accordance with one embodiment, joining of the integral SOFC unit cells 400 and 501 can include placing the electrode layer portion 301 in direct contact with the electrode layer portion 502 and heating the SOFC unit cells 400 and 501 to a joining temperature. Notably, because the electrode layer portion 502 and electrode layer portion 301 can include the same material, including for example, a particular cathode material, the bonding of the two layers, and ultimately the SOFC unit cells 501 and 400 is less complicated than other processes joining layers of different compositions.

In certain embodiments, the joining process can include the application of heat to the SOFC unit cells. As discussed above, the joining process can include a thermal treatment at a particular temperature below the sintering temperatures used to form the component SOFC unit cells being joined.

Moreover, the joining process may include a pressing operation, wherein pressure is applied to the component SOFC unit cells to facilitate formation of a SOFC article. For example, the pressure may be applied via uniaxial pressing, and more particularly, may be uniaxial hot pressing. Alternatively, the pressure may be applied isostatically, and the joining process may utilize hot isostatic pressing. In particular embodiments utilizing pressures during the joining process, suitable pressures can be within a range between about 0.1 to 50 MPa, such as between about 0.2 to 20 MPa.

The methods for forming facilitate the formation of integral SOFC unit cells having particular characteristics. For example, according to one embodiment, the electrolyte layer can be in a particular state of compression after forming the SOFC unit cell and after forming the SOFC article. Notably, utilization of the combination of feature disclosed herein, including the particular types of materials, ordering of layers, and sintering temperatures facilitates free-sintering formation of SOFC unit cells and SOFC stacks, wherein the electrolyte layer is in compression. This is evidenced in part by little to no cracks within the electrolyte layer upon examination.

In particular instances, the SOFC unit cells formed according to the embodiments herein can be quantified to have less than 1 crack per 60 microns of length when the unit cell is viewed in cross-section at a magnification of approximately 2000X. FIG. 6 includes a cross-sectional view of a portion of a SOFC unit cell (CFL-E-A-IC-CFL) formed according to an embodiment. In particular, FIG. 6 illustrates a portion of approximately 90 microns in length along the interface of the electrolyte (E) and cathode function layer (CFL) of the unit cell. As illustrated, upon examination of a randomly selected portion of the electrolyte and cathode functional layer portion at a magnification of approximately 2000X, the electrolyte layer (E) has less than 1 crack per 10 microns of length, such as less than 1 crack per 20 µm (microns) of length, less than 1 crack per 30 µm (microns) of length, less than 1 crack per 40 µm (microns) of length, less than 1 crack per 50 µm (microns) of length, less than 1 crack per 60 µm (microns) of length, or even less than 1 crack per 90 µm (microns) of length. In particular instances, the unit cells of the embodiments herein can have less than 1 crack per 100 µm (microns) of length, less than 1 crack per 500 µm (microns) of length, or even less than 1 crack per 1 cm of length, as viewed in the proper magnification. Moreover, there are no cracks in the visible field that extend entirely through the electrolyte layer (E).

The interconnect layer of a unit cell formed according to an embodiment herein, can also exhibit the same limited crack features of the electrolyte layer. Accordingly, a unit cell of at least an electrolyte layer, anode layer, and interconnect layer can be formed in a single-free sintering process, wherein the electrolyte layer, anode layer, and interconnect layer demonstrate little to no cracking, which facilitates improved processing and performance.

Moreover, the SOFC unit cells and SOFC stacks formed according to the embodiments herein demonstrate particularly improved warpage, which is measured as the mid-point deflection, as provided in Malzbender et al., "Curvature of Planar Solid Oxide Fuel Cells during Sealing and Cooling of Stacks", FUEL CELLS 06, 2006, No. 2, 123-129. For example, the average warpage of the SOFC unit cells according to embodiments herein can be not greater than about 200 microns. Average warpage can be measured using a Micro Measure 3D Surface Profilometer, utilizing a white light chromatic aberration technique, wherein the warpage is measured according to a ISO 12781 standard for defining waviness parameters on a sampling length. The parameters estimated on a sampling length are then averaged on all the available sampling lengths as indicated in the ISO 4288 standard. In one embodiment, the SOFC unit cell can have an average warpage of not greater than about 150 µm (microns), not greater than about 125 µm (microns), not greater than about 100 µm (microns), not greater than about 80 µm (microns), not greater than about 50 µm (microns), not greater than about 40 µm (microns), or even not greater than about 30 µm (microns). In other instances, the average warpage of the SOFC unit cell may be at least about 0.1 µm (microns), at least about 0.5 microns, or even at least about 1 µm (micron). It will be appreciated that the average warpage can be within a range between and including any of the minimum and maximum values noted above.

Furthermore, the electrolyte layer 101 of the integral SOFC unit cells according to the embodiments can be a particularly dense layer. For example, the density can be at least about 95% theoretical density. In other embodiments, the density can be greater, such as at least about 97%, at least about 98%, or even at least about 99% theoretical density. Accordingly, the porosity of the electrolyte layer can be limited, such as not greater than about 5%, not greater than about 3%, not greater than about 2%, or even not greater than about 1%.

In certain instances, the electrolyte layer 101 of an integral SOFC unit cell according to an embodiment, can have a coefficient of thermal expansion (CTE) less than a CTE of the first electrode layer 103 (e.g., anode) of the integral SOFC unit cell. According to another embodiment, the interconnect layer 107can have a coefficient of thermal expansion (CTE) less than a CTE of the first electrode layer103 (e.g., anode) of the integral SOFC unit cell.

According to one embodiment, the SOFC unit cells can be formed into operable SOFC stacks as described herein, and demonstrate particular electro-chemical characteristics. For example, the SOFC articles of the embodiments herein can have an open circuit voltage (OCV) of at least about 95% theoretical, wherein open circuit voltage is measured according to the test parameters of 800°C in 100%H₂. In other instances, the (OCV) can be at least about 95% theoretical, at least about 97% theoretical, or even at least about 98% theoretical. In more particular terms, the testing parameters of OVC include an initial set up and check for air side and fuel side leak rates. If a stack passes the leak test, it is heated up at 2 °C/min up to 800 °C, while the hydrogen concentration is increased step by step to reduce the presence of NiO. When the OCV is stable at 100%H₂, three measurements of current, voltage, and impedance are taken to generate three I-V curves and impedances plots.

In accordance with one particular embodiment, the operation temperature of the SOFC articles formed herein can be within a range between about 600°C and about 1000°C.

### EXAMPLE 1

A SOFC unit cell is formed according to the following method. A green tape of anode material (Praxair NiO-YSZ; 50:50 wt%) is cast (∼100 µm (micron) thick) from a slurry containing an anode powder material having an average particle size between 0.5 microns and 5 µm (microns) using portable table-top tape caster available as ZAA 2300 model from Zehntner Testing Instruments (Zehntner, Switzerland). Several anode tapes (5 or 10) are cast and disposed between (i.e., laminated) a single green tape of Al-Mn 8YSZ electrolyte material formed from a slurry containing an electrolyte powder material having an average particle size between 0.2 µm (microns) and 5 µm (microns) and a single green tape of doped LST interconnect material formed from a slurry containing an interconnect powder material having an average particle size between 0.5 µm (microns) and 6 µm (microns) to form a green SOFC unit cell. The co-efficient of thermal expansion of the doped 8YSZ electrolyte material and LST interconnect material are -10.8 ppm/°C and 11.1 ppm/°C, respectively. Channels were laser-cut in green AB and CB tapes and fugitive channel formers were used to fabricate electrodes with gas channels.

The green SOFC unit cell is co-sintered in a single, free-sintering process at a sintering temperature of 1280°C with an isothermal hold of about one hour to form an integral SOFC unit cell comprising an electrolyte/anode/interconnect construction. A small alumina plate is placed on the SOFC unit cell during the free-sintering process. The integral SOFC unit cell has a planar shape, having a thickness of approximately 500-600 microns, wherein the electrolyte layer has an approximate thickness of approximately 30 µm (microns), the anode has an approximate thickness of approximately 500 µm (microns), and the interconnect has an approximate thickness of approximately 20-30 µm (microns). The integral SOFC unit cell was crack-free and the interfaces between the layers demonstrated superior adhesion and bond strength as compared to other constructions, such as those that attach the interconnect to an electrode in a secondary thermal treatment. The warpage of the unit cell was less than 100 µm (microns). As such, during isothermal hold, the electrolyte material and the interconnect material can be in compression.

### EXAMPLE 2

A SOFC unit cell is formed according to the following method. A green tape of anode material (AB), which is commercially available as Praxair NiO-YSZ; 50:50 wt%, is cast (∼100 µm (micron) thick) from a slurry containing an anode powder material having an average particle size between 0.5 µm (microns) and 5 µm (microns) using portable table-top tape caster available as ZAA 2300 model from Zehntner Testing Instruments (Zehntner, Switzerland). Several anode tapes (5 or 10) are cast and placed on (i.e., laminated) a single green tape of Al-Mn doped 8YSZ electrolyte material (E) formed from a slurry containing an electrolyte powder material commercially available from Tosoh having an average particle size between 0.2 µm (microns) and 5 µm (microns). A single green tape of doped La_{0.2}Sr_{0.8}TiO₃ interconnect material (IC) available from American Elements is placed on the opposing side of the anode from the electrolyte tape. The green tape of interconnect material is formed from a slurry containing an interconnect powder material having an average particle size between 0.5 µm (microns) and 6 µm (microns). Green tapes of a cathode functional layer (CFL) are formed to overly the interconnect and electrolyte material, such that a green unit cell having a structure (CFL-E-A-IC-CFL) is formed. One tape of the cathode functional layer is cast for each of the layers. The tapes of the cathode functional layer are cast from a slurry containing a cathode functional layer powder material, which is a mixture of LSM powder [(La_{0.8}Sr_{0.2})_{0.98}MnO₃] commercially available from Praxair and a 8YSZ material commercially available from Unitec. The cathode functional layer powder material has an average particle size between 1 and 10 µm (microns). The co-efficient of thermal expansion of the component layers E, IC, CF, and AB were ∼10.8, 11.1, 11.5, 12.5ppm/ °C respectively.

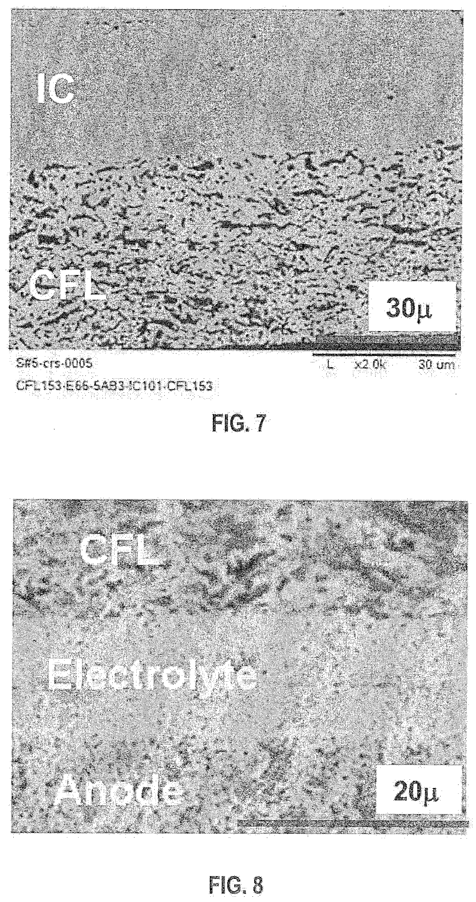

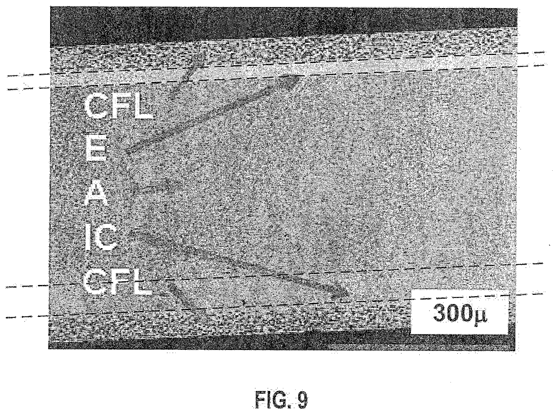

The CFL-E-A-IC-CFL unit cell is co-sintered in a single, free sintering process with a small load (<2 kPa) to a sintering temperature of 1280 °C with isothermal hold of 1 hour. Crack-free, dense electrolyte and interconnect layers were successfully fabricated (see, FIGs. 6-9). The interfaces between the electrolyte and anode and interconnect and anode layers were well-bonded. The co-sintered CFL-E-A-IC-CFL unit cell has a warpage of approximately 10-40 µm (microns). A bulk cathode (CB) unit cell is formed by tape casting and laminating several tapes (10-14 tapes) together. The green tape of bulk cathode material (CB) is formed from a slurry containing 25 vol% PMMA pore formers and a cathode powder material commercially available from NexTech as (La_{0.8}Sr_{0.2})_{0.98}MnO₃. The CB unit cell is co-sintered in a single, free sintering process at a sintering temperature of 1120 °C with isothermal hold of 1 hour.

The CFL-E-A-IC-CFL and CB unit cells are bonded together bonded by depositing (e.g., stenciling or printing) a manganite slurry (e.g., a LSM slurry) on the CB and CFL surfaces and firing to 1120 °C at a pressure of 1.5. MPa-2.0 MPa to form a bonded stack. The bonded stack machined into a 2x2 cm² stack, which is sealed and leak-checked. The stack demonstrated exceptional performance with an open circuit voltage (OCV) of >95% of theoretical value.

The embodiments herein represent a departure from the state-of-the-art. While sintering of multiple layers of SOFC stacks has been disclosed (See, for example, US 5,922,486 or US 6,228,520), none of the processes have realized and utilized a free-sintering process including the combination of features disclosed herein. Notably, according to the embodiments herein, such features include, but are not limited to, particular compositions of the component layers (i.e., cathode, electrolyte, anode, and interconnect), arrangement of the component layers, physical characteristics of the component layers (e.g., thickness and density), free-sintering temperature as related to the sintering temperature of the component layers, post free-sintering processing and bonding techniques, warpage, thermal cycling resilience, and the like. The present application discloses a streamlined process for forming a SOFC article including new process features facilitating improved SOFC unit cells and SOFC articles having improved mechanical and electrical characteristics.

## Claims

1. A method for forming a solid oxide fuel cell (SOFC) article comprising:
forming a green SOFC unit cell (100) comprising:
a green electrolyte layer (101) having an electrolyte sintering temperature;
a green interconnect layer (107) having an interconnect sintering temperature; and
a first green electrode layer (103) disposed between the green electrolyte layer (101) and the green interconnect layer (107), the first green electrode layer (103) having a first electrode sintering temperature; and
sintering the green SOFC unit cell (100) in a single free-sintering process to form a sintered SOFC unit cell (100),
wherein:
sintering is conducted at a sintering temperature below the first electrode sintering temperature, above the electrolyte sintering temperature, and above the interconnect sintering temperature, and
diffusion bonds are formed between the components of the interconnect layer and the first electrode layer.

2. The method of claim 1, wherein the electrolyte layer (101) is in direct contact with the first electrode layer (103) and wherein the interconnect layer (107) is in direct contact with the first electrode layer (103).

3. The method of claim 1, wherein the first electrode layer (103) comprises yttria-stabilized zirconia.

4. The method of claim1, wherein forming includes an isothermal hold of the SOFC unit cell at a first sintering temperature.

5. The method of claim 1, further comprising forming a second electrode layer (303) overlying the interconnect layer (107).

6. The method of claim 5, wherein forming a second electrode (303) comprises a second sintering process separate from the single, free-sintering process of forming the SOFC unit cell (100).

7. The method of claim 1, wherein the single sintering process is a free-sintering process conducted at atmospheric pressure.

8. The method of claim 1, further comprising forming a portion of a second electrode layer (301, 303) on the sintered SOFC unit cell (100).

9. The method of claim 1, wherein the SOFC unit cell (100) comprises an average warpage of not greater than 150 µm (microns), wherein the average warpage is measured according to ISO 12781 standard.

10. The method of claim 1, wherein the electrolyte layer (101) comprises an average thickness of not greater than 1 mm.

11. The method of claim 1, wherein the electrolyte layer (101) comprises a coefficient of thermal expansion (CTE) less than a CTE of the first electrode layer (103).

12. The method of claim 1, wherein the interconnect layer (107) comprises a coefficient of thermal expansion (CTE) less than a CTE of the first electrode layer (103).

13. The method of claim 1, wherein the electrolyte layer (101) comprises a coefficient to thermal expansion (CTE) that is the same as a CTE of the interconnect layer (107).

## Patentansprüche

1. Verfahren zum Bilden eines Festoxidbrennstoffzellen(SOFC)-Artikels, umfassend:
Bilden einer grünen SOFC-Einheitszelle (100), umfassend:
eine grüne Elektrolytschicht (101) mit einer Elektrolytsintertemperatur;
eine grüne Verbindungsschicht (107) mit einer Verbindungssintertemperatur;
und eine erste grüne Elektrodenschicht (103), die zwischen der grünen Elektrolytschicht (101) und der grünen Verbindungsschicht (107) angeordnet ist,
wobei die erste grüne Elektrodenschicht (103) eine erste Elektrodensintertemperatur aufweist; und
Sintern der grünen SOFC-Einheitszelle (100) in einem einzelnen Freisinterverfahren zum Bilden einer gesinterten SOFC-Einheitszelle (100), wobei:
das Sintern bei einer Sintertemperatur unter der ersten Elektrodensintertemperatur, über der Elektrolytsintertemperatur, und über der Verbindungssintertemperatur durchgeführt wird, und
Diffusionsbindungen zwischen den Bestandteilen der Verbindungsschicht und der ersten Elektrodenschicht gebildet werden.

2. Verfahren nach Anspruch 1, wobei die Elektrolytschicht (101) in direktem Kontakt mit der ersten Elektrodenschicht (103) ist, und wobei die Verbindungsschicht (107) in direktem Kontakt mit der ersten Elektrodenschicht (103) ist.

3. Verfahren nach Anspruch 1, wobei die erste Elektrodenschicht (103) Yttriumstabilisiertes Zirkonium umfasst.

4. Verfahren nach Anspruch 1, wobei das Bilden ein isothermes Beibehalten der SOFC-Einheitszelle bei einer ersten Sintertemperatur beinhaltet.

5. Verfahren nach Anspruch 1, ferner umfassend eine zweite Elektrodenschicht (303), die über der Zwischenschicht (107) liegt.

6. Verfahren nach Anspruch 5, wobei das Bilden einer zweiten Elektrode (303) einen zweiten Sinterprozess, getrennt von dem einzelnen Freisinterprozess, zum Bilden der SOFC-Einheitszelle (100) umfasst.

7. Verfahren nach Anspruch 1, wobei der einzelne Sinterprozess ein Freisinterprozess ist, der unter atmosphärischem Druck durchgeführt wird.

8. Verfahren nach Anspruch 1, ferner umfassend das Bilden eines Teils einer zweiten Elektrodenschicht (301, 303) auf der gesinterten SOFC-Einheitszelle (100).

9. Verfahren nach Anspruch 1, wobei die SOFC-Einheitszelle (100) eine durchschnittliche Verkrümmung von nicht mehr als 150 µm (Micron) umfasst, wobei die durchschnittliche Verkrümmung gemäß dem ISO 12781 Standard gemessen wird.

10. Verfahren nach Anspruch 1, wobei die Elektrolytschicht (101) eine durchschnittliche Dicke von nicht mehr als 1 mm umfasst.

11. Verfahren nach Anspruch 1, wobei die Elektrolytschicht (101) einen Wärmeausdehnungskoeffizienten (WAK) aufweist, der geringer als ein WAK der ersten Elektrodenschicht (103) ist.

12. Verfahren nach Anspruch 1, wobei die Verbindungsschicht (107) einen Wärmeausdehnungskoeffizienten (WAK) aufweist, der geringer als ein WAK der ersten Elektrodenschicht (103) ist.

13. Verfahren nach Anspruch 1, wobei die Elektrolytschicht (101) einen Wärmeausdehnungskoeffizienten (WAK) aufweist, der gleich wie ein WAK der ersten Verbindungsschicht (107) ist.

## Revendications

1. Procédé destiné à la formation d'un élément de pile à combustible à oxyde solide (SOFC) comprenant : la formation d'une cellule unitaire de SOFC crue (100) comprenant :
une couche d'électrolyte crue (101) présentant une température de frittage de l'électrolyte ;
une couche d'interconnexion crue (107) présentant une température de frittage de l'interconnexion ; et
une première couche d'électrode crue (103) disposée entre la couche d'électrolyte crue
(101) et la couche d'interconnexion crue (107), la première couche d'électrode crue
(103) présentant une première température de frittage de l'électrode ; et le frittage de la cellule unitaire de SOFC crue (100) dans un procédé libre de frittage unique pour former une cellule unitaire de SOFC frittée (100),
dans lequel :
le frittage est réalisé à une température de frittage au-dessous de la température de frittage de la première électrode, au-dessus de la température de frittage de l'électrolyte et au-dessus de la température de frittage de l'interconnexion et
les liaisons de diffusion sont formées entre les composants de la couche d'interconnexion et la première couche d'électrode.

2. Procédé selon la revendication 1, dans lequel la couche d'électrolyte (101) est en contact direct avec la première couche d'électrode (103) et dans lequel la couche d'interconnexion (107) est en contact direct avec la première couche d'électrode (103).

3. Procédé selon la revendication 1, dans lequel la première couche d'électrode (103) comprend de la zircone stabilisée à l'yttria.

4. Procédé selon la revendication 1, dans lequel la formation comporte un maintien isotherme de la cellule unitaire de SOFC à une première température de frittage.

5. Procédé selon la revendication 1, comprenant en outre la formation d'une seconde couche d'électrode (303) recouvrant la couche d'interconnexion (107).

6. Procédé selon la revendication 5, dans lequel la formation d'une seconde électrode (303) comprend un second procédé de frittage distinct du procédé libre de frittage unique de formation de la cellule unitaire de SOFC (100).

7. Procédé selon la revendication 1, dans lequel le procédé de frittage unique est un procédé libre de frittage réalisé à la pression atmosphérique.

8. Procédé selon la revendication 1, comprenant en outre la formation d'une partie d'une seconde couche d'électrode (301, 303) sur la cellule unitaire de SOFC frittée (100).

9. Procédé selon la revendication 1, dans lequel la cellule unitaire de SOFC (100) comprend un voilage moyen inférieur à 150 µm (microns), dans lequel le voilage moyen est mesuré conformément à la norme ISO 12781.

10. Procédé selon la revendication 1, dans lequel la couche d'électrolyte (101) comprend une épaisseur moyenne inférieure à 1 mm.

11. Procédé selon la revendication 1, dans lequel la couche d'électrolyte (101) comprend un coefficient de dilatation thermique (CTE) inférieur au CTE de la première couche d'électrode (103).

12. Procédé selon la revendication 1, dans lequel la couche d'interconnexion (107) comprend un coefficient de dilatation thermique (CTE) inférieur au CTE de la première couche d'électrode (103).

13. Procédé selon la revendication 1, dans lequel la couche d'électrolyte (101) comprend un coefficient de dilatation thermique (CTE) qui est identique au CTE de la couche d'interconnexion (107).
